# EUROPEAN PATENT APPLICATION

(11) **EP 4 804 303 A1**
(43) Date of publication of application: **09.09.2026**
(21) Application number: 24885529.8
(22) Date of filing: 22.10.2024
(51) Int. Cl.: H01M 50/145, H01M 10/0566, H01M 10/0587, H01M 50/107, H01M 50/152

(54) **CYLINDRICAL NONAQUEOUS ELECTROLYTE SECONDARY BATTERY**

(30) Priority: 31.10.2023 JP 2023186471
(71) Applicant: Panasonic Intellectual Property Management Co., Ltd., Kadoma-shi, Osaka 571-0057 (JP)
(72) Inventor: IKEDA, Noriko, Kadoma-shi, Osaka 571-0057 (JP)
(74) Representative: Eisenführ Speiser
(86) International application number: PCT/JP2024/037507
(87) International publication number: WO 2025/094756

(57) **Abstract**

Provided is a cylindrical nonaqueous electrolyte secondary battery for which corrosion of an opening end of an outer can is suppressed. A cylindrical nonaqueous electrolyte secondary battery as an example embodiment of this invention includes: an outer can having a bottomed cylindrical shape and a groove part at an opening part; a nonaqueous electrolyte and an electrode body housed in the outer can; and a sealing body closing the opening part of the outer can. The electrode body has a winding structure. A tape for fixing a winding end of the electrode body is stuck to an outer peripheral surface of the electrode body. The tape has an extended part that extends out from an end on the groove part side of the outer peripheral surface. The extended part contacts the groove part and absorbs the nonaqueous electrolyte.

## Description

### TECHNICAL FIELD

The present disclosure relates to a cylindrical non-aqueous electrolyte secondary battery, and more particularly to a non-aqueous electrolyte secondary battery with reduced corrosion of a housing can.

### BACKGROUND

A cylindrical non-aqueous electrolyte secondary battery includes a cylindrical housing can having a bottom, which houses a wound electrode assembly and a nonaqueous electrolyte. A sealing assembly is crimped and fixed between a grooved portion and an opening end of the housing can, with a gasket being interposed between the grooved portion and the opening end, to thereby seal the interior. Typically, an electrode assembly has a winding finish end which is fixed with a tape. Patent Document 1, for example, discloses that tapes are affixed to the vicinities of respective opposite axial ends of the electrode assembly.

### CITATION LIST

### PATENT LITERATURE

Patent Document 1: WO 2018/168628

### SUMMARY

During production of a battery, a non-aqueous electrolyte injected into the housing can may remain on the opening portion of the housing can. The non-aqueous electrolyte remaining on an opening end that is the end of an opening portion of the housing can reacts with a moisture content in the air to generate hydrogen fluoride, which may corrode the opening end. The present inventors have diligently repeated studies and found a method of allowing a tape that is affixed to the outer peripheral face of the electrode assembly to extend out or protrude from an edge of the housing can adjacent to the grooved portion and to absorb the non-aqueous electrolyte remaining on the tape. This method enables reduction in corrosion of the opening end in a simple manner.

A cylindrical non-aqueous electrolyte secondary battery according to the present disclosure includes: a housing can having a cylindrical shape with a bottom and including a grooved portion in an opening portion; an electrode assembly and a non-aqueous electrolyte housed in the housing can; and a sealing assembly that closes the opening portion of the housing can. The electrode assembly has a wound configuration and includes an outer peripheral face having a tape affixed to the outer peripheral face to fix a winding finish end of the electrode assembly. The tape has an extension portion extending out from an edge of the outer peripheral face adjacent to the grooved portion. The extension portion is in contact with the grooved portion to absorb the non-aqueous electrolyte.

The cylindrical non-aqueous electrolyte secondary battery according to the present disclosure enables reduction of corrosion in the opening end of the housing can.

### BRIEF DESCRIPTION OF DRAWINGS

[FIG. 1] FIG. 1 is an axial sectional view of a cylindrical non-aqueous electrolyte secondary battery according to an example embodiment.
[FIG. 2] FIG. 2 is a perspective view of an electrode assembly according to an example embodiment; and
[FIG. 3] FIG. 3 is an enlarged view of a portion in the vicinity of an opening portion of a housing can illustrated in FIG. 1.

### DESCRIPTION OF EMBODIMENTS

A cylindrical non-aqueous electrolyte secondary battery according to an example embodiment of the present disclosure will be described in detail below by reference to the drawings. The embodiment described below is only an example, and the present disclosure is not limited to the embodiment below. Further, embodiments including selective combinations of elements of the embodiment described below are encompassed in the present disclosure.

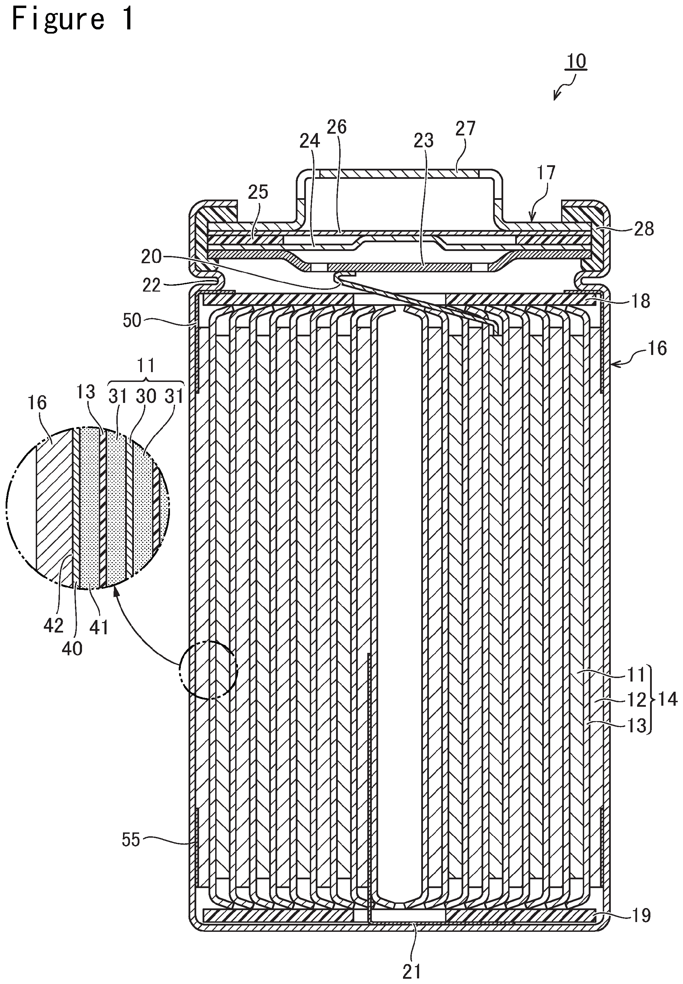

FIG. 1 schematically illustrates an axial cross section of a secondary battery 10 according to an example embodiment. As illustrated in FIG. 1, the secondary battery 10 includes an electrode assembly 14 having a wound configuration, a non-aqueous electrolyte, and a cylindrical housing can 16 with a bottom, which houses the electrode assembly 14 and the non-aqueous electrolyte. The electrode assembly 14 includes a positive electrode 11, a negative electrode 12, and a separator 13, and has a configuration in which the positive electrode 11 and the negative electrode 12 are wound in a spiral shape with the separator 13 interposed between the positive electrode 11 and the negative electrode 12. The housing can 16 is a cylindrical metallic container with a bottom, which is opened on one axial end. The opening portion of the housing can 16 is closed with a sealing assembly 17. In the following description, the direction toward the sealing assembly 17 of the secondary battery 10 is defined as upward and the direction toward the bottom of the housing can 16 is defined as downward, for the convenience of explanation.

A non-aqueous solvent (organic solvent) of the non-aqueous electrolyte may be any of carbonates, lactones, ethers, ketones, esters, and the like, and two or more of these solvents may be mixed for use. A mixed solvent including a cyclic carbonate and a chain carbonate is preferably used as a mixture of two or more of these solvents. For example, ethylene carbonate (EC), propylene carbonate (PC), or butylene carbonate (BC), for example, may be used as the cyclic carbonate, and dimethyl carbonate (DMC), ethyl methyl carbonate (EMC), or diethyl carbonate (DEC), for example, may be used as the chain carbonate. An electrolyte salt of the non-aqueous electrolyte may be LiPF₆, LiBF₄, or LiCF₃SO₃, for example, or a mixture thereof. An amount of the electrolyte salt to be dissolved in the non-aqueous solvent may be, for example, greater than or equal to 0.5 mol/L and less than or equal to 2.0 mol/L.

The positive electrode 11, the negative electrode 12, and the separator 13 constituting the electrode assembly 14 are all belt-shaped elongated members, and are alternately laminated in the radial direction of the electrode assembly 14 by being wound in a spiral shape. The negative electrode 12 is one size larger than the positive electrode 11 to prevent precipitation of lithium. Specifically, the negative electrode 12 is longer than the positive electrode 11 in the longitudinal direction and the width direction (short-side direction). The separator 13 is one size larger than at least the positive electrode 11, and two separators 13 are disposed to sandwich the positive electrode 11. The secondary battery 10 includes insulating plates 18 and 19 disposed above and below the electrode assembly 14, respectively.

The electrode assembly 14 includes a positive electrode lead 20 connected with the positive electrode 11 by welding, for example, and a negative electrode lead 21 connected with the negative electrode 12 by welding, for example. In the present embodiment, the positive electrode lead 20 is connected to a center portion of the positive electrode 11 in the longitudinal direction, and the negative electrode lead 21 is connected to an end portion of the negative electrode 12 in the longitudinal direction, which is located adjacent to the winding core of the electrode assembly 14.

The positive electrode 11 includes a positive electrode current collector 30 and a positive electrode mixture layer 31 disposed on the positive electrode current collector 30. The positive electrode current collector 30 may include a foil of a metal that is stable in the potential range of the positive electrode 11, such as aluminum or aluminum alloy, or a film with the metal disposed on a surface layer, for example. The positive electrode mixture layer 31 includes a positive electrode active material, a conductive agent, and a binder, and is preferably disposed on both sides of the positive electrode current collector 30 excluding a portion where the positive electrode lead 20 is welded. The positive electrode 11 may be prepared, for example, by applying a positive electrode mixture slurry containing a positive electrode active material, a conductive agent and a binder, for example, onto the positive electrode current collector 30 to form a coating film; and drying and then compressing the coating film to form the positive electrode mixture layer 31 on both sides of the positive electrode current collector 30.

The positive electrode mixture layer 31 typically contains a particulate lithium metal composite oxide as the positive electrode active material. The lithium metal composite oxide is a composite oxide containing metal elements such as Co, Mn, Ni, and Al in addition to Li. The metal element constituting the lithium metal composite oxide is at least one selected from the group consisting of, for example, Mg, Al, Ca, Sc, Ti, V, Cr, Mn, Fe, Co, Ni, Cu, Zn, Ga, Ge, Y, Zr, Sn, Sb, W, Pb, and Bi. Among these metal elements, at least one selected from the group consisting of Co, Ni, Al, and Mn is preferably contained. Examples of suitable composite oxides include a lithium metal composite oxide containing Ni, Co, and Mn, and a lithium metal composite oxide containing Ni, Co, and Al.

The negative electrode 12 includes a negative electrode current collector 40 and a negative electrode mixture layer 41 disposed on the negative electrode current collector 40. The negative electrode current collector 40 may include a foil of a metal that is stable in the potential range of the negative electrode 12, such as copper or copper alloy, or a film with the metal disposed on a surface layer, for example. The negative electrode mixture layer 41 contains a negative electrode active material, a binder, and, if necessary, a conductive agent, and is preferably disposed on both sides of the negative electrode current collector 40 excluding an exposed portion 42, which will be described below, and a portion where the negative electrode lead 21 is welded. The negative electrode 12 may be prepared by applying a negative electrode mixture slurry containing a negative electrode active material and a binder, for example, to a surface of the negative electrode current collector 40 to form a coating film; and drying and then compressing the coating film to form the negative electrode mixture layer 41 on both sides of the negative electrode current collector 40.

The negative electrode mixture layer 41 typically includes, as the negative electrode active material, a carbon material that reversibly occludes and releases lithium ions. A preferable example carbon material is graphite, such as natural graphite and artificial graphite. The negative electrode active material may include a material containing at least one of an element that forms an alloy with Li, such as Si and Sn, or a material containing the element. In particular, a composite material containing Si is preferably used. Preferable Si-containing composite material may be a composite particle containing an ion conduction phase and an Si phase dispersed in the ion conduction phase. The negative electrode active material may be a combination of a carbon material and an Si-containing composite material, which is preferable in terms of achieving both high capacity and high durability of the battery.

A porous sheet having ionic permeability and insulation properties is used for the separator 13. Specific examples of porous sheets include microporous thin films, woven fabrics, and nonwoven fabrics, for example. Polyolefins such as polyethylene and polypropylene, cellulose, and the like are suitable as materials for the separator 13. The separator 13 may have a single-layer structure or a multi-layer structure. A resin layer having high heat resistance, such as aramid resin, may be formed on a surface of the separator 13. A filler layer containing an inorganic filler may be disposed on the interface between the separator 13 and at least one of the positive electrode 11 or the negative electrode 12.

The negative electrode 12 is disposed on the outer peripheral face of the electrode assembly 14, where an exposed portion 42 where a surface of the negative electrode current collector 40 is exposed is formed. The exposed portion 42 may be formed on part of the outer peripheral face of the electrode assembly 14; however, the exposed portion 42 is preferably formed over the entire region of the outer peripheral face. The exposed portion 42 may be formed only one side (outer face) of the negative electrode current collector 40 facing outward of the electrode assembly 14, or may be formed on both sides of the negative electrode current collector 40. The exposed portion 42 is formed to have a length in a range of approximately one to two times the circumferential length of the electrode assembly 14 from the longitudinal end of the negative electrode 12 located on the outer peripheral face of the electrode assembly 14, for example.

In the secondary battery 10, the exposed portion 42 of the negative electrode 12 is in contact with an inner face of the housing can 16, and the negative electrode lead 21 is connected with an inner face of the bottom portion of the housing can 16 by welding, for example. The exposed portion 42 is in contact with the inner face of the housing can 16 along the entire circumference of the outer peripheral face of the electrode assembly 14. The positive electrode lead 20 extends through a through hole of the insulating plate 18 toward the sealing assembly 17, and is connected, by welding, for example, to an interior terminal plate 23 serving as a bottom plate of the sealing assembly 17. As such, in the present embodiment, the sealing assembly 17 functions as a positive electrode external terminal and the housing can 16 functions as a negative electrode external terminal.

As described above, the housing can 16 is a cylindrical metal container having a bottom, with one axial side being open. A gasket 28 is disposed between the housing can 16 and the sealing assembly 17 to ensure sealing inside the battery and insulation between the housing can 16 and the sealing assembly 17. The housing can 16 includes, at the opening portion, a grooved portion 22, which has a side surface portion partially protruding inward and supports the sealing assembly 17. The grooved portion 22 is preferably annularly formed along the circumferential direction of the housing can 16 and supports the sealing assembly 17 on its upper face. The grooved portion 22 is formed annually along the entire circumference of the housing can 16 by spinning, for example. The sealing assembly 17 is fixed to the top of the housing can 16 by the grooved portion 22 and an opening end portion of the housing can 16 which is crimped onto the sealing assembly 17.

The sealing assembly 17 has a structure in which the internal terminal plate 23, a lower vent member 24, an insulating member 25, an upper vent member 26, and a cap 27 are laminated sequentially in this order from a location adjacent the electrode assembly 14. These members constituting the sealing assembly 17 have a disk shape or a ring shape, for example, and the members excluding the insulating member 25 are electrically connected to each other. The lower vent member 24 and the upper vent member 26 are connected to each other at a central part, and the insulating member 25 is interposed between the lower vent member 24 and the upper vent member 26 in their peripheral portions. When the internal pressure of the battery 10 rises at the occurrence of an anomaly, the lower vent member 24 deforms and ruptures to push the upper vent member 26 toward the cap 27, thereby interrupting the current path between the lower vent member 24 and the upper vent member 26. With a further rise of the internal pressure, the upper vent member 26 ruptures, and gas is discharged from the opening portion of the cap 27.

Tapes 50 and 55 are affixed to the outer peripheral face of the electrode assembly 14. The tapes 50 and 55 are affixed to the respective axial end portions of the outer peripheral face of the electrode assembly 14, with the tape 50 being disposed adjacent to the grooved portion 22 of the housing can 16 and the tape 55 being disposed adjacent to the bottom of the housing can 16. As will be described in detail below, the tape 50 extends out or protrudes from an edge, adjacent to the grooved portion 22, of the outer peripheral face of the electrode assembly 14, and the extended portion is in contact with the grooved portion 22.

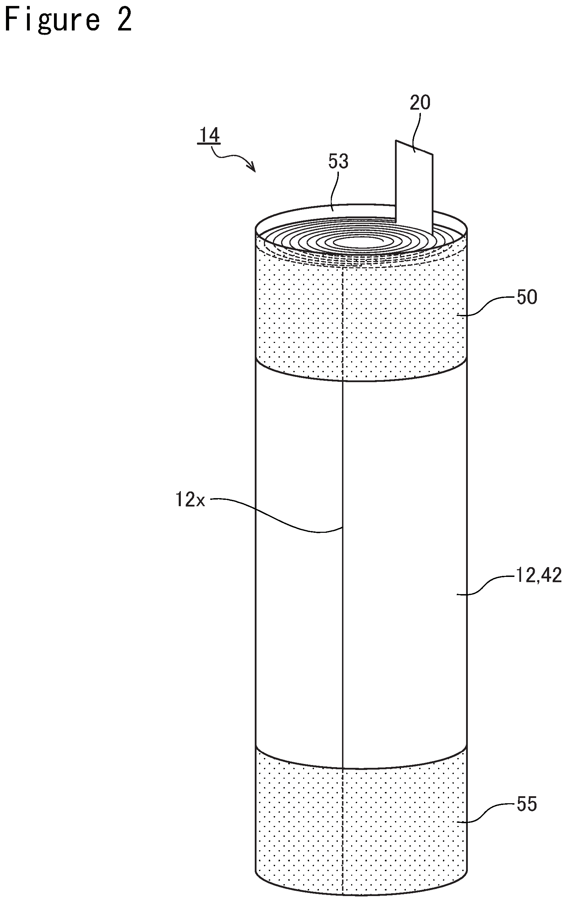

The tapes 50 and 55 will be described in detail below by reference to FIG. 2. FIG. 2 is a perspective view of the electrode assembly 14.

As illustrated in FIG. 2, the tapes 50 and 55 are stop tapes that fasten a winding finish end 12x of the wound configuration of the electrode assembly 14 to maintain the wound configuration of the electrode assembly 14. In the present embodiment, the exposed portion 42 of the negative electrode 12 constitutes the outer peripheral face of the electrode assembly 14, and a longitudinal end of the negative electrode 12 functions as the winding finish end 12x of the wound configuration. The tapes 50 and 55 are affixed to the outer peripheral face (exposed portion 42) of the electrode assembly 14 across the winding finish end 12x to fasten the winding finish end 12x to a portion of the outer peripheral face of the electrode assembly 14 located further winding inward with respect to the winding finish end 12x.

The tapes 50 and 55 have a belt-like shape. The tapes 50 and 55 are preferably disposed such that the longitudinal direction of the tapes 50 and 55 extend along the circumferential direction of the electrode assembly 14 and the tapes 50 and 55 are spaced from each other in the axial direction of the electrode assembly 14. The tape 50 is affixed to an upper end portion (one axial end portion) of the electrode assembly 14 and the tape 55 is affixed to a lower end portion (the other axial end portion) of the electrode assembly 14. This configuration stably maintains the wound configuration of the electrode assembly 14. This configuration further prevents the axial end portions of the electrode assembly 14 from contacting the edges of the housing can 16 and being turned up, thereby enabling smooth insertion of the electrode assembly 14 into the housing can 16.

The tape 50 is affixed along the circumferential direction of the electrode assembly 14 across the winding finish end 12x. The length of the tape 50 along the circumferential direction of the electrode assembly 14 is preferably 90% or more of the circumferential length of the outer peripheral face. This configuration enables the tape 50 to absorb a non-aqueous electrolyte remaining on any locations in the circumferential direction of the housing can 16. With this configuration, the tape 50 absorbs a non-aqueous electrolyte remaining near a region where the tape 50 is not present, by allowing the non-aqueous electrolyte to move to the tape 50 at the time of crimping the sealing assembly 17.

The length of the tape 50 along the circumferential direction of the electrode assembly 14 is preferably 100% or less of the circumferential length of the outer peripheral face. The length of the tape 50 exceeding 100% of the circumferential length of the electrode assembly 14 makes the end portions of the tape 50 overlapping each other, which may hinder insertion of the electrode assembly 14 into the housing can 16. The length of the tape 55 may be the same as or different from the length of the tape 50. The tape 55, in contrast to the tape 50, does not require a function to absorb the non-aqueous electrolyte; therefore, the tape 55 may have a length that allows the tape 55 to be affixed across the winding finish end 12x and to function as a winding stop tape.

The tapes 50 and 55 have a width corresponding to a length that is equal to or greater than 5% and equal to or less than 25% of the axial length of the electrode assembly 14. The width of the tapes 50 and 55 is preferably substantially uniform over the entire length. The widths of the tapes 50 and 55 may be the same as or different from each other. When the portions of the tapes 50 and 55 affixed to the outer peripheral face of the electrode assembly 14 have the same width, the tape 50 has a larger width than the tape 55 by an amount protruding from the end of the outer peripheral face adjacent to the grooved portion 22. The tape 55 is typically affixed to the outer peripheral face with a space (e.g., 1 mm or less) being disposed between the tape 55 and the lower edge of the outer peripheral face, in consideration of an affixation error.

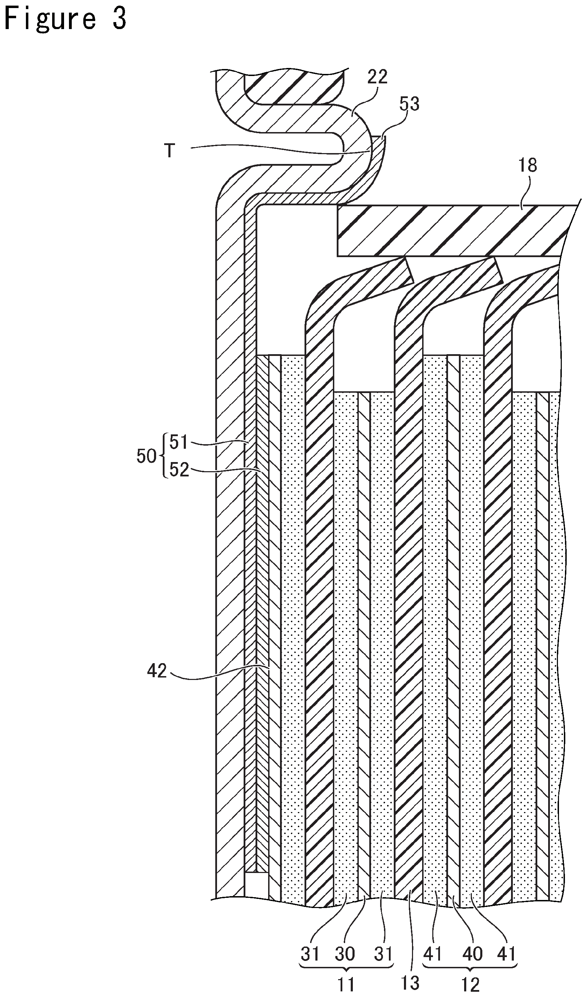

With reference to FIG. 2 and FIG. 3, the tape 50 will be described in further detail below. FIG. 3 is an enlarged view of a portion of the housing can 16 near the opening portion illustrated in FIG. 1.

As illustrated in FIG. 2 and FIG. 3, the tape 50 affixed to the upper end portion of the electrode assembly 14 includes an extension portion 53 extending out from the edge of the outer peripheral face of the electrode assembly 14 adjacent to the grooved portion 22. The extension portion 53 contacts the grooved portion 22 of the housing can 16, and absorbs a non-aqueous electrolyte remaining on the grooved portion 22 after the non-aqueous electrolyte is injected into the secondary battery 10. As such, the tape 50 serves as a winding stop tape that maintains the wound configuration of the electrode assembly 14, and also functions as an absorber that inhibits corrosion at the opening end of the housing can. The tape 50 is affixed to the outer peripheral face of the electrode assembly 14 and is integral with the electrode assembly 14.

The tape 50 includes, for example, a tape base member 51 and an adhesive layer 52 disposed on one side of the tape base member 51. The tape base member 51 is composed of a resin base member having a single or multiple layer configuration, for example. The adhesive layer 52 is formed, for example, by applying an adhesive to one side of the tape base member 51.

Any resin that absorbs the non-aqueous electrolyte may be employed for constituting the tape base member 51. The resin constituting the tape base member 51 is, for example, a resin that swells by absorbing the non-aqueous electrolyte. The resin constituting the tape base member 51 include, for example, one or more resins selected from the group consisting of a polyurethane resin, a polystyrene resin, a fluorine-containing resin, and a polyether resin. Examples of the fluorine-containing resin include, for example, PVDF, and examples of the polyether resin include toxyoligoethylene oxypolyphosphazenes, for example.

An adhesive constituting the adhesive layer 52 may be a hot-mel adhesive that expresses adhesiveness by heating or a thermosetting adhesive that is hardened by heating; however, an adhesive having adhesiveness at room temperatures is preferable in terms of productivity, for example. Examples of an adhesive constituting the adhesive layer 52 include, for example, an acrylic adhesive and a synthetic rubber-based adhesive.

The thickness of the tape 50 is greater than or equal to 10 µm and less than or equal to 100 µm, for example, and is preferably greater than or equal to 20 µm and less than or equal to 70 µm. The thickness of the tape base member 51 is greater than the thickness of the adhesive layer 52, and is greater than or equal to 10 µm and less than or equal to 65 µm, for example. The thickness of the adhesive layer 52 is greater than or equal to 5 µm and less than or equal to 30 µm, for example.

After the electrode assembly 14 to which the tape 50 is affixed is housed in the housing can 16, the grooved portion 22 is formed on the housing can 16, thereby allowing the extension portion 53 of the tape 50 to be bent radially inward of the electrode assembly 14 along the grooved portion 22. At this time, it is assumed that the extension portion 53, if adhered to the electrode assembly 14, would not be bent properly along the grooved portion 22. It is therefore preferable that the extension portion 53 has no adhesion to the electrode assembly 14.

In the present embodiment, the adhesive layer 52 is disposed only on a portion facing the outer peripheral face of the electrode assembly 14, and not on the extension portion 53. The extension portion 53 is composed only of the tape base member 51. The entire region of the tape 50 facing the outer peripheral face of electrode assembly 14 may be affixed to the outer peripheral face. The adhesive layer 52 may be disposed on the entire region of one side of the tape base member 51, with the adhesive layer 52 in the extension portion 53 being covered with a covering layer having no adhesion. The covering layer may include the same resin base member as in the tape base member 51.

As described above, the tape 50 includes a portion facing the outer peripheral face of the electrode assembly 14, and the extension portion 53 extending out from the upper edge of the outer peripheral face. As illustrated in FIG. 2, the extension portion 53 extends out in the axial direction of the electrode assembly 14 from the upper edge of the outer peripheral face before the electrode assembly 14 is housed in the housing can 16. As illustrated in FIG. 3, when forming the grooved portion 22 on the housing can 16 after the electrode assembly 14 is housed in the housing can 16, the extension portion 53 is bent radially inward of the electrode assembly 14 along the grooved portion 22 and comes into contact with the grooved portion 22. Thereafter, when injecting the non-aqueous electrolyte into the housing can 16, the non-aqueous electrolyte may remain on the grooved portion 22. By allowing the extension portion 53 to absorb the non-aqueous electrolyte remaining on the grooved portion 22, it is possible to prevent the non-aqueous electrolyte from reaching the opening end of the housing can 16, thereby reducing corrosion of the opening end.

The extension portion 53 preferably extends beyond a tip of the grooved portion 22 along the grooved portion 22. The tip T of the grooved portion 22 as used herein refers to a portion of the grooved portion 22 located most radially inward. This configuration enables the extension portion 53 to reliably absorb the non-aqueous electrolyte remaining on the grooved portion 22.

The tape 55 may have a composition similar to that of the tape 50, or may be a typical winding stop tape. The tape 55 includes, for example, a tape base member and an adhesive layer disposed on one side of the tape base member. Example resins constituting the tape base member of the tape 55 include polyester such as polyethylene terephthalate (PET), polypropylene (PP), polyimide (PI), polyphenylene sulfide (PPS), polyether imide (PEI), and polyamide. Example adhesives constituting the adhesive layer of the tape 55 include an acrylic adhesive, and a synthetic rubber-based adhesive.

As described above, the secondary battery 10 having the above configuration enables reduction of corrosion of the opening end of the housing can 16 by using the winding stop tape 50. The tape 50 is affixed to the outer peripheral face of the electrode assembly 14 and is integral with the electrode assembly 14, and the extension portion 53 comes into contact with the grooved portion 22 during forming of the grooved portion 22. This enables the extension portion 53 to absorb the non-aqueous electrolyte remaining on the grooved portion 22.

The above embodiment may be modified in design within a range that would not impair the object of the present disclosure. For example, while in the above embodiment, the outer peripheral face of the electrode assembly 14 is the exposed portion 42 of the negative electrode 12, the outer peripheral face may be the separator 13. This configuration may also employ the tape 50 having a configuration similar to that in the above embodiment. Further, while in the above embodiment, the housing can 16 functions as a negative electrode external terminal, the housing can 16 may function as a positive electrode external terminal, by connecting the positive electrode lead 20 to the housing can 16.

The present disclosure will be further described according to the following embodiments.
Configuration 1:
   A cylindrical non-aqueous electrolyte secondary battery comprising:
   a housing can having a cylindrical shape with a bottom, the housing can including a grooved portion in an opening portion;
   an electrode assembly and a non-aqueous electrolyte housed in the housing can; and
   a sealing assembly that closes the opening portion of the housing can, wherein
   the electrode assembly has a wound configuration and includes an outer peripheral face having a tape affixed to the outer peripheral face to fix a winding finish end of the electrode assembly,
   the tape has an extension portion extending out from an edge of the outer peripheral face adjacent to the grooved portion, and
   the extension portion is in contact with the grooved portion to absorb the non-aqueous electrolyte.
Configuration 2:
   The cylindrical non-aqueous electrolyte secondary battery according to Configuration 1, wherein
   the tape includes a tape base member and an adhesive layer disposed on one side of the tape base member, and
   the extension portion has no adhesion to the electrode assembly.
Configuration 3:
   The cylindrical non-aqueous electrolyte secondary battery according to Configuration 1 or 2, wherein
   the tape has a length along a circumferential direction of the electrode assembly, the length being greater than or equal to 90% of a circumferential length of the outer peripheral face.
Configuration 4:
   The cylindrical non-aqueous electrolyte secondary battery according to Configuration 1 or 2, wherein
   the tape has a length along a circumferential direction of the electrode assembly, the length being less than or equal to 100% of a circumferential length of the outer peripheral face.

### REFERENCE SIGNS LIST

10 cylindrical non-aqueous electrolyte secondary battery, 11 positive electrode, 12 negative electrode, 12x winding finish end, 13 separator, 14 electrode assembly, 16 housing can, 17 sealing assembly, 18, 19 insulating plate, 20 positive electrode lead, 21 negative electrode lead, 22 grooved portion, 23 interior terminal plate, 24 lower vent member, 25 insulating member, 26 upper vent member, 27 cap, 28 gasket 30 positive electrode current collector, 31 positive electrode mixture layer, 40 negative electrode collector, 41 negative electrode mixture layer, 42 exposed portion, 50, 55 tape, 51 tape base member, 52 adhesive layer, 53 extension portion, T tip.

## Claims

1. A cylindrical non-aqueous electrolyte secondary battery comprising:
a housing can having a cylindrical shape with a bottom, the housing can including a grooved portion in an opening portion;
an electrode assembly and a non-aqueous electrolyte housed in the housing can; and
a sealing assembly that closes the opening portion of the housing can, wherein
the electrode assembly has a wound configuration and includes an outer peripheral face having a tape affixed to the outer peripheral face to fix a winding finish end of the electrode assembly,
the tape has an extension portion extending out from an edge of the outer peripheral face adjacent to the grooved portion, and
the extension portion is in contact with the grooved portion to absorb the non-aqueous electrolyte.

2. The cylindrical non-aqueous electrolyte secondary battery according to claim 1, wherein
the tape includes a tape base member and an adhesive layer disposed on one side of the tape base member, and
the extension portion has no adhesion to the electrode assembly.

3. The cylindrical non-aqueous electrolyte secondary battery according to claim 1, wherein
the tape has a length along a circumferential direction of the electrode assembly, the length being greater than or equal to 90% of a circumferential length of the outer peripheral face.

4. The cylindrical non-aqueous electrolyte secondary battery according to claim 1, wherein
the tape has a length along a circumferential direction of the electrode assembly, the length being less than or equal to 100% of a circumferential length of the outer peripheral face.
